(19) Europäisches Patentamt

European Patent Office

Office européen des brevets

(11) EP 1 408 081 A1

(12) EUROPEAN PATENT APPLICATION
published in accordance with Art. 158(3) EPC

(43) Date of publication:
14.04.2004 Bulletin 2004/16

(51) Int Cl.7: C08L 23/10, C08K 9/06,
B29C 44/00

(21) Application number: 02743695.5

(22) Date of filing: 24.06.2002

(86) International application number:
PCT/JP2002/006285

(87) International publication number:
WO 2003/000791 (03.01.2003 Gazette 2003/01)

(84) Designated Contracting States:
AT BE CH CY DE DK ES FI FR GB GR IE IT LI LU
MC NL PT SE TR

(30) Priority: 22.06.2001 JP 2001190367

(71) Applicant: IDEMITSU PETROCHEMICAL CO.,
LTD.
Tokyo 130-0015 (JP)

(72) Inventors:
• SAITO, Hiromu
  Tokyo Univ. of Agriculture & Techn.
  Koganei-shi, Tokyo 184-8588 (JP)
• ODA, Takafumi
  Tokyo Univ. of Agriculture & Techn.
  Koganei-shi, Tokyo 184-8588 (JP)
• ABIKO, Toshiya
  Ichihara-shi, Chiba 299-0107 (JP)

• ITO, Kazuhiko
  Ichihara-shi, Chiba 299-0107 (JP)
• KANZAWA, Mitsugu
  Sodegaura-shi, Chiba 299-0261 (JP)
• TATSUMI, Fumio
  Ichihara-shi, Chiba 299-0107 (JP)
• KAWATO, Hiroshi
  Ichihara-shi, Chiba 299-0107 (JP)
• NOMURA, Manabu
  Ichihara-shi, Chiba 299-0107 (JP)
• KONAKAZAWA, Takehito
  Ichihara-shi, Chiba 299-0107 (JP)

(74) Representative: Hucker, Charlotte Jane
Gill Jennings & Every
Broadgate House,
7 Eldon Street
London EC2M 7LH (GB)

(54) COMPOSITE RESIN COMPOSITION&comma; RESIN FOAM&comma; AND PROCESS FOR PRODUCING THE SAME

(57) The present invention provides a composite resin composition comprises A) polypropylene-based resin by 100 weight portions, (B) organized denatured clay by 0.1 to 50 weight portions, and (C) maleic anhydride denatured polypropylene by 0.5 to 30 weight portions, in which the maleic anhydride denatured polypropylene satisfies the following conditions that the quantity of not-reacted maleic anhydride is outside a limit for quantitative analysis; that the percentage of acid content against a number of polymer chains is not less than 0.8 and not more than 2.0; that the molecular weight distribution is not less than 2.5; that the percentage of components with the molecular weight of 10,000 or less is not more than 0.5% by weight; and that the ultimate viscosity ($\eta$) is 1 or more. A supercritical gas is infiltrated in this composite resin composition for degassing to obtain resin foam. With the operations above, bubbles are formed finely and homogeneously at the high density and high solidity is provided.

FIG.2

(STEP 1)
(A) POLYPROPYLENE-BASED RESIN
(B) ORGANIZED DENATURED CLAY
(C) SPECIFIED MATEIC ANHYDRIDE DENATURED PP

(STEP 2)
KNEADING

(STEP 3)
A RESIN COMPOSITE CONTAINING CLAY LAYERS

(STEP 4)
FOAMING IN THE SUPERCRITICAL STATE

(STEP 5)
SUPERCRITICAL FINE RESIN FOAM

## Description

### Technical Field

The present invention relates to a composite resin composition containing organized denatured clay and a polypropylene-based rein containing maleic anhydride denatured polypropylene as main ingredients, resin foam obtained by foaming this composite resin composition, and a method of producing the same. Further the present invention relates to resin foam obtained by finely foaming a thermoplastic resin composition containing a layered silicate, and a method of producing the same.

### Background Art

There have been developed various types of technologies for improving solidity or bas barrier capability of a thermoplastic resin by dispersing a small quantity of layered quantity. As the technologies, there has been known, for instance, the composite resin composition containing the maleic anhydride propylene oligomer, organized denatured clay, and polypropylene described in Japanese Patent Laid-Open No. HEI 10-182892.

When maleic anhydride not reacted yet is present in maleic anhydride denatured polypropylene, a molecular weight of a matrix as a base material for the main ingredient becomes smaller, and sometimes the sufficient mechanical characteristics such as solidity may not be obtained. Although Japanese Patent Laid-Open No. HEI 10-182892 includes the descriptions concerning a molecular weight or a functional group weight of maleic anhydride denatured propylene oligomer in the conventional type of composite resin composition, the publication includes no description concerning maleic anhydride not reacted yet, and the functional mechanical characteristics may not be obtained in the obtained composite resin composition.

On the other hand, as a method of finely foaming a composite resin composition, there has been known the method of producing resin foam having fine bubbles each with the size of 10 µm or below by infiltrating a supercritical gas and then degassing therefrom. This finely foaming method is classified to a successive forming method and a batch foaming method. In the successive forming method, the operations for setting the composite resin composition into a specific form, infiltrating the supercritical gas, and degassing are simultaneously carried out in an injection molding machine or an extrusion molding machine. In the batch foaming method, after the composite resin composition as a material to be molded is molded, the operations for infiltrating the supercritical gas and degassing are carried out in another process. Not the possibilities of applying the successive forming method and batch foaming method for industrial purposes have been examined, and also the efforts have been made to foam a homogeneous and fine foam structure to further improve the physical characteristics of the resin foam.

However, it is very difficult to homogeneously infiltrate a gas in the supercritical state in a composite resin composition and to provide controls for homogeneously degassing the infiltrated supercritical gas, so that it has been difficult to generate a homogenous and fine foam structure.

To solve the problems, in the conventional technology for foaming and molding, there has been known the technology for blending an inorganic filler to obtain a homogeneous and fine foam structure. Although the improving effect has bee achieved to some extent in molding with the conventional chemical foaming agent, even when the chemical foaming agent is used in foam molding by means of the supercritical method, as a quantity of inorganic filler capable of providing foam nucleus generating effect is small against a number of foal cells, the substantial improving effect is not provided, and when a large quantity of filler is blended therein to increase the foam nuclei, the mechanical characteristics of the resin foam may disadvantageously be spoiled, and further the effect of weight reduction by means of foaming may disadvantageously be spoiled.

### Disclosure of the Invention

A object of the invention is to provide, for solving the various problems as described above, a composite resin composition having the excellent mechanical characteristics, resin foam obtained by foaming this composite resin composition and having the homogeneous and fine foaming structure, and a method of producing the same.

To achieve the objectives as described above, the inventors made concentrated efforts and discovered that, in a composite resin composition obtaining by mixing organized denatured clay and a certain maleic anhydride denatured polypropylene in a polypropylene-based resin and kneading the mixture, the clay layers are substantially homogeneously and finely dispersed, and that, when the composite resin composition is foamed with a supercritical, the same effect as that provided by presence of a number of flaming nuclei is achieved even by an extremely small quantity of inorganic fillers and a material with enhanced strength and yet capable of preventing increase in weight can be obtained, and completed this invention. The resin foam according to the present invention is sometimes described as "resin foam (1)" and the production method as "resin foam production method (1)" hereinafter.

The composite resin composition according to the present invention is characterized in that, in 100 weight portions of a polypropylene-based resin (A), 0.1 to 50 weight portions of organized denatured clay (B) and 5 to 30 weight portions of maleic anhydride denatured polypropylene (C) satisfying the conditions that the contents of maleic anhydride not reacted yet is outside the range detectable in quantitative analysis (C-1); a ratio of the acid content against a number of polymer chains is in the range from 0.8 to 2.0 (C-2); the molecular distribution is not more than 2.5 (C-3); a content of components each having the molecular weight of 10,000 or below is not more than 0.5 % by weight (C-4); and the limit viscosity [η] is 1 or more (C-5) are blended.

In this invention, because layers of the organized denatured clay are well separated from each other and homogeneously dispersed, a resin composition having the high solidity and excellent gas impermeability is provided.

The organized denatured clay is blended by 1 to 50 weight portions against 100 weight portions of the polypropylene-based resin. When the content of the organized denatured clay is less than 0.1 weight portions, a quantity of the organized denatured clay showing the foaming nucleus generating effect is too small, which may make it difficult for the material to homogeneously foam. On the other hand, when the content of the organized denatured clay is over 50 weight portions, the weight reduction effect is lost and the melt viscosity of the composite resin composition becomes higher, which may also make it difficult for the material to foam.

Further, preferably a 2:1 type of layered silicate having the layer charge in the range from 0.1 to 0.7 is used as the organized denatured clay in the present invention.

It can be considered that the 2:1 type of layered silicate having the layer charge has large plate-like structures, which improves the mechanical characteristics of the composite resin composition as well as of the resin foam. When the layer charge of the 2:1 type of layered silicate is less than 0.1, the mutual reaction with the maleic anhydride denatured polypropylene is not sufficient, which may sometimes make it difficult to achieve the objectives of the present invention. On the other hand, when layer charge is more than 0.7, the degree of organized denaturation is too high, and when the organized denatured clay and other components are mixed and kneaded together, the silicate functions as a plasticizer, which may degrade the mechanical characteristics of the composite resin composition or the resin foam. When the 2:1 type layered silicates is blended as it is, separation and dispersion of clay layers hardly occur, which may make it impossible to form the so-called nanocomposite.

The layered compositions include clay, clay minerals, and ion-exchangeable layered compounds.

Herein the clay means a collection of fine and hydrous silicate minerals, and when an appropriate quantity of water is added to and the clay is kneaded, the plasticity is generated, and when the material is calcinated at a high temperature, sintering occurs. The term of clay minerals as used herein indicates hydrous silicates as main components of the clay. Not only the natural products, but also synthesized ones may be used in this invention. The ion-exchangeable compounds indicates compounds each having a crystal structure in which the surfaces thereof are laminated, for instance, by ionic bond, in parallel to each other to form the crystal structure. The clay minerals also include ion-exchangeable layered compounds.

The clay minerals include, for instance, phylosilicates. This phylosilicates include, for instance, a phylosilicic acid or a phylosilicate. The phylosilicates include, as natural products, for instance, montmorillonite, saponite, hectrolite each belonging to the mica group; illite, sericite each belonging to the mica group; mixed layer minerals between the smectite group and the mica group; or mixed layer minerals between the mica group and the vermiculite group. The synthesized phylosilicates include, for instance, fluorine quad silicon mica, laponite, smectone. In addition, such ion crystalline compounds as $\alpha$-Zr(HPO$_4$)$_2$, $\gamma$-Zr(HPO$_4$)$_2$, $\alpha$-Ti(HPO$_4$)$_2$, and $\gamma$-Ti(HPO$_4$)$_2$, which are no clay minerals but has the layered crystal structure may be used for this purpose.

As the 2:1 type of layered silicates having the layer charge in the range from o.1 to 0.7, the clay mineral group called smectite (with the layer charge from 0.2 to 0.6) is especially desirable. Further hectorite, saponite, and montmorillonite are preferably, and montmorillonite are especially preferable. As the synthesized product, the fluorine quad silicon mica (with the layer charge of 0.6) is preferable. As the 2:1 type of layered compounds having layer charge, especially those having a lithium ion or a sodium ion as the inter-layer ion are preferable because the swelling capability in water is remarkable.

As a method of generating the organized denatured clay, namely a method of organizing clay, for instance, clay is injected into water to form a homogeneous slurry. Then alkyl ammonium chloride is added to the slurry to substitute the sodium ions between the clay layers. More specifically, for instance, refined montmorillonite is dispersed in hot water to form a homogeneous slurry. Then a hot aqueous solution with octadecyl amine and hydrochloric acid dissolved therein is added to this slurry, and the generated precipitate is cleaned with hot water and then filtered and dried. The method of obtaining the organized denatured clay is not limited to the method described above, and any method may be employed for this organizing processing.

The organized denatured clay is blended by 1 to 50 weight portions against 100 weight portions of the polypropylene-based resin. When a contents of the organized denatured clay is less than 0.1 weight portion, a quantity of the organized denatured clay showing the foaming nucleus generating effect is too small, which may makes it difficult for the organized denatured clay to homogeneously foam. On the other hand, when the contents of the organized denatured clay is more than 50 weight portions, the effect for weight reduction is lost with the melt viscosity of the composite resin composition becoming higher, which may also make it difficult for the material to foam.

The maleic anhydride denatured polypropylene is blended by 0.5 to 30 weight portions against 100 weight portions of the polypropylene-based resin. When the contents of the maleic anhydride denatured polypropylene is less than 0.5 weight portions, layer separation does not occur in the organized denatured clay. When the content of the maleic anhydride denatured polypropylene is more than 30 weight portions, the elasticity modulus of the composite resin composition or the resin foam becomes lower.

As for a quantity of the maleic anhydride denatured polypropylene, a content of the maleic anhydride not reacted yet should be outside the range detectable by quantitative analysis. In other words, when the maleic anhydride not reacted yet is present in the range detectable in the quantitative analysis, a molecular weight of the polypropylene-based resin which is a matrix resin as a mother matter for main ingredients becomes lower, which may sometimes make it difficult to obtain the sufficient mechanical strength such as solidity of the composite resin composition. Further, for instance, when carbon dioxide is used as the supercritical gas, the solubility of the gas becomes excessively high, which lowers the melt tension of the resin in the melted state, which may makes it difficult to finely control diameters of bubbles in the resin foam.

Herein, the outside the range detectable in quantitative analysis is defined as follow. Namely, quantification of the not-reacted maleic anhydride is carried out by repetitively carrying out 5 times the process in which, for instance, 5 g of maleic anhydride denatured polypropylene is dissolved in 500 ml of paraxylene at the temperature of 130°C and precipitated in 4 l of acetone. It is recognized by NMR (Nuclear Magnetic Resonance) quantitative analysis that a quantity of maleic anhydride precipitated in each cycle in this process is always in the range from $0.047 \pm 0.001$ mole %, and it is recognized that substantially all of not-reacted maleic anhydride is removed. The maleic anhydride denatured polypropylene obtained by this process is outside the range detectable in quantitative analysis.

The supercritical state as defined herein indicates the state between the gas state and liquid state. A gas enters the supercritical state at a temperature and a pressure higher than those specific to the gas (critical points), and in this state the permeability to inside of the composite resin composition becomes higher as compared to that in the liquid state, and the permeation occurs homogeneously.

Any type of gas may be used in this invention so long as the gas can permeate the resin in the supercritical state. The gases available for this purpose include, for instance, inert gases such as carbon dioxide, nitrogen, air, oxygen, hydrogen, and helium. Carbon dioxide and nitrogen are especially preferable.

The method of producing independent foam by infiltrating a supercritical gas in a resin composition and a device for the same are classified to the batch foaming method in which a step of molding the composition and a step of infiltrating the supercritical gas in the molded body and then degassing for foaming are carried out independently, and to the successive foaming method in which the molding step and the foaming step are carried out successively. For instance, the production devices as disclosed in US Patent No. 5258986 and Japanese Patent Laid-Open Publication No. HEI 10-230528 may be used in this process.

A ratio of the acid content against a number of polymeric chains in the maleic anhydride denatured polypropylene should be in the range from 0.8 to 2.0. This ratio is calculated by comparing the acid content [mol/g] against the number of polymeric chains calculated based on the numerical average molecular weight obtained by, for instance, the gel permeation chromatography (GPC) method. When this ratio is 1, one molecule of acid originated from the maleic anhydride is attached to one polymeric chain. When the ratio of the acid content against the number of polymeric chains is not in the range from 0.8 to 2.0, the inter-layer separation and dispersibility of the organized denatured clay are degraded, which may disable improvement in the mechanical characteristics. Further, when the ratio of the acid content against the number of polymeric chains is more than 2.0, the thermal deformation temperature of the composite resin composition becomes lower, and the heat resistance can not be obtained.

Further in the maleic anhydride denatured polypropylene, the molecular weight distribution (Mw/Mn) indicating a ratio of the weight average molecular weight (MW) against the numerical average molecular weight (Mn) should be less than 2.5. When the molecular weight distribution is more than 2.5, homogeneous dispersion of clay is difficult with the transparency degraded, which worsens the appearance, and also improvement in the mechanical characteristics can not be achieved.

In the maleic anhydride denatured polypropylene, the content of components each having the molecular weight of 10,000 or less should be 0.5% by weight or below. When the content of components each having the molecular weight of 10,000 or less is more than 0.5% by weight, the contents of low molecular weight components increases with the melt viscosity degraded, and, for instance, when the composite resin composition is foamed by using the fluid in the supercritical state, fine structures are hardly generated, which makes it impossible to obtain desired resin foam having fine bubbles distributed therein. Further, the mechanical characteristics of the polypropylene-based resin which is a base resin as a mother matter for main ingredients may be degraded.

Further, the maleic anhydride denatured polypropylene should have the limit viscosity [η] of 1 or more (in decaline at 135°C). When the limit viscosity is less than 1, the mechanical characteristics of the composite resin composition may be degraded. When the limit viscosity is 3 or more, the elasticity modulus of the composite resin composition or resin form may become lower, and therefore the limit viscosity is preferably in the range from 1 to 3.

In the composite resin composition according to the present invention, the melt index (MI) is preferably not less than 0.4 g/10 minutes and not more than 60 g/10 minutes, and the melt tension (MT) preferably satisfies the following expression (1):

$$\log MT > -0.8 \ (\log MI) + 0.54 \qquad\qquad \text{Expression (1)}$$

where in the melt index (MI) of the composite resin composition is a value at the temperature of 230°C and under the load of 2.16 Kg, and when the melt index (MI) does not satisfy the expression (1), or when the melt index (MI) surpasses 60 g/10 minutes, foaming may lose homogeneity. When the melt index (MI) is less than 0.4 g/10 minutes, foaming may not occur.

The expression (1) indicates that the melt tension of the composite resin composition according to the present invention is higher than that of polypropylene in the normal state. The melt tension is a value obtained by the method described hereinafter, and the unit is gram.

The resin foam (1) according to the present invention is characterized in that it is produced by infiltrating a supercritical gas in a composite resin composition which is a nanocomposite obtained by mixing organized denatured clay in the polypropylene-based resin described above and then subjecting the composite resin composition to degassing.

In this invention, a fine and homogeneous foam structure can be obtained, and further the foam structure is excellent in the mechanical characteristics such as solidity.

Used for the resin foam (I) is a composite resin composition having the average molecular diameter (major axis) of 150 nm or below of the organized denatured clay and showing no peak angle value detectable by means of wide-angle X ray diffraction. The resin composition as described above is called nanocomposite, shows the effect that there are a number of fine foam nuclei, and is very preferable as a composite resin composition for foaming. The effect above becomes more remarkable when a space between bottom faces of organized denatured clay dispersed in the composite resin composition (inter-layer range) is not less than 30 Å and not higher than 500 Å, and more preferably when it is not less than 50 Å and not higher than 200 Å.

When the average molecular diameter of the organic denatured clay is more than 150 nm, although the physical characteristics such as tensile force, elasticity modulus, and heat deformation temperature are preserved, but the foam diameter may lose the homogeneity. Further the condition that the composite resin composition should not shown any peak angle value detectable by means of the wide-angle X ray diffraction (WAXS) indicates that the interlayer space of the organized denatured clay dispersed in the composite resin composition or in the resin foam is sufficient and that the composite resin composition or the resin foam takes a form of the so-called nanocomposite substantially in the state closer to the complete layer separation, which is very advantageous as the resin foam.

The peak angle value by the wide-angle X ray diffraction (WAXS) is obtained by measuring the spaces between bottom faces under the conditions of target: CuKα ray, monochrome meter, voltage of 50 kV, current of 180 mA, scanning angle 2θ of 1.5° or more and not more than 40.0°, and step angle of 0.1°. The bottom face space of the layered silicate is calculated by applying the wide-angle X ray diffraction peak value into the Bragg's equation. When it is difficult to identify the wide-angle X ray peak angle, it is regarded that the inter-layer space becomes sufficiently large to lose the crystalinity, or that the peak angle value is not higher than about 1.5° and is hard to be identified, and in that case the bottom face space was assessed as 60 Å or more. To explain more accurately, when this peak angle value can not be identified, it often occurs that the layers in the layered silicate are separated from each other and the silicate is in the state of mono-layer silicate.

Further in the resin foam, the foam cell diameter along the major axis should be not larger than 10 μm, and preferably not larger than 5μm. When the foam cell diameter is larger than 10μm, the merit of the so-called microcellular structure, namely the merit of fine foaming structure adapted to preservation of the original solidity before foaming may not sufficiently be achieved.

Further the resin foam (I) preferably has the cyclic structure in which the resin phases and porous phases are formed alternately and are interlaced with each other. Namely, when the resin foam has the cyclic structure, a length of one cycle should preferably be not less than 5 nm and not more than 100 μm, and preferably be not less than 10 nm and not more than 50μm. When the cycle length is more than 100μm, the foam structure may be too porous. When the cycle length is less than 5μm, the porous phase is too small, and in that case sometimes the merit of continuous foam such as, for instance, the filtering function may not be provided. To evade the cases as described above, the length of one cycle should be set to a value not less than 5 nm and not more than 100μm. It is to be noted that there is no specific limitation over a foaming scale in the resin foam 1, but the scale is generally in the range from 1.1 to 3 times, and preferably in the range from 1.2 to 2.5 times.

The composite resin composition satisfying the requirements described above is heated to a temperature not lower than the melting point (Tm) of the composite resin composition and not less than (Tm + 50)°C for fusing it, and the supercritical gas is infiltrated in the fused composition, or the supercritical gas having the temperature not lower than the crystallizing temperature (Tc) of the composite resin composition - 20°C (not lower than (Tc - 20)°C) in the gas atmosphere and not higher than the crystallizing temperature (Tc) + 50°C (not higher than (Tc + 50)°C ) is infiltrated in a prespecified composite resin composition. When the temperature is less than the melting point Tm of the composite resin composition or less than (Tc - 20)°C, the composite resin composition can not sufficiently be mixed or kneaded, which disenables molding under the desired conditions. When the temperature is higher than (Tm + 50)°C or (Tc + 50) °C, the composite resin composition may decompose.

Herein the Tm and Tc are values obtained by measurement according to, for instance, the differential scanning calorimetry (DSC) method under the following conditions. Namely, a sample placed in a nitrogen atmosphere at the temperature of 50°C is heated to 220°C at the heating rate of 500°C/minute, maintained at 220°C for 3 minutes, and then cooled down to 50°C at the cooling rate of 1.0°C/minute. During this process, the crystallizing temperature (Tc) is measured. Then, after the sample is maintained at the temperature of 50°C for 3 minutes, the sample is heated to 190°C at the heating rate of 10°C/minute. During this step, the melting point (Tm) is measured.

Degassing is carried out by cooling the composite resin composition with the supercritical gas infiltrated therein to the temperature range of (Tc ± 20)°C. If degassing is carried out outside the temperature range of (Tc ± 20)°C, too large bubbles may be generated, or crystallization of the composite resin composition may be insufficient with the strength and solidity lowered, even though the homogeneity in foaming is sufficient.

Further, when the resin composition is molded within a molding box, it is especially preferable to reduce the pressure loaded to the composite resin composition, for instance, by filling the composite resin composition with the supercritical gas having been infiltrated therein in the molding box and moving back the molding box. With the operations as described above, foaming fault seldom occurs at a position near the gate, and the homogeneous foam structure can be obtained.

The resin foam (I) according to the present invention may contain, according to the necessity, any of the inorganic fillers such as alumina, silica nitrate, talc, mica, titanium oxide, clay compounds and carbon black, antioxidant, light stabilizer, pigment at the ratio of 0.01 to 30 weight portions, and more preferably at the ratio of 0.1 to 10 weight portions against 100 weight portions of the foam. When the high strength or high solidity is required, the foam may contain incombustible materials such as carbon fiber or glass fiber at the ratio of 1 to 100 weight portions against 100 weight portions of the foam.

Another object of the present invention is to provide a molded body having more homogeneous and finer foam structure as compared to that obtained by the foam molding method based on the supercritical method, and a method of producing the same.

To achieve the objects described above, the present inventors made concentrated efforts, found that even a small quantity of inorganic filler could provide, when the layered silicate with the average grain diameter (major axis) of 100 nm or below is homogeneously dispersed in a resin composition, the same effect as that provided by the presence of a number of foam nuclei and prevent increase in weight, and completed the invention. Hereinafter, the resin foam according to this invention may be described as "resin foam (II)", and the method for producing the same as "the resin foam production method (II)".

The resin foam (II) according to the present invention is resin foam obtained by infiltrating a supercritical gas in a resin composition comprising a thermoplastic resin by 100 weight portions and layered silicate by 0.1 to 40 weight portions and then subjected in the resin composition to degassing, and is characterized in that the average grain size (major axis) is not more than 100 nm and the peak angle value can not be identified by means of wide-angle X diffraction.

In the resin foam (II) described above, it is desirable that the melt index (MI) of the resin composition is in the range from 0.4 to 60 g/10 minutes, and also that the melt tension (MT) satisfies the following expression (1). Meaning of the expression (1) is the same as that described in relation to the resin foam (I) above.

$$\log MT > -0.8 \, (\log MI) + 0.54 \qquad \text{Expression (1)}$$

In the resin foam (II), a foam cell diameter of the resin foam is preferably not more than 10μm.

In the resin foam (II), it is desirable that the resin foam has resin phases and porous phases provided alternately in succession and interlaced with each other to form a cyclic structure.

The resin foam production method (II) according to the present invention is characterized in that the method comprises the steps of infiltrating a supercritical gas in a resin composition comprising a thermoplastic resin by 100 weight portions and a layered silicate by 0.1 to 40 weight portions with the average grain diameters of the layered silicate (major axis) therein of not more than 100 nm and not showing a peak angle value detectable by means of wide-angle X ray diffraction when the resin composition is in the temperature range from the melting point (described as Tm hereinafter) to (Tm + 50)°C; and cooling the resin composition to a temperature of the crystallizing temperature of the resin composition (described as Tc) ±20°C.

In the resin foam production method (II) described above, molding of the resin composition is carried out within a die, and it is desirable that degassing is carried out by moving back the die and at the same time depressurizing and/or cooling inside of the die.

In the resin foam production method (II) described above, it is desirable that the supercritical gas is infiltrated in a molded article of a resin composition comprising a thermoplastic resin by 100 weight portions and a layered silicate by 01. to 40 weight portions with the average gain diameter (major axis) of the layered silicate in the composition of not more than 100 nm and not showing a peak angle value detectable by means of the wide-angle X ray diffraction when the temperature in the gas atmosphere is in the range from (Tc - 20) to (Tc + 50)°C, and then the molded article is cooled down to the temperature of (Tc + 20)°C for degassing.

In the resin foam production method (II) described above, it is desirable that the supercritical gas is infiltrated in a resin composition comprising a thermoplastic resin by 100 weight portions, a 2:1 type compound having the layer charge in the range from 0.1 to 0.7, and a nucleus generating agent by 0.01 to 5 weight portions.

In the resin foam production method (II) described above, it is desirable that the melt index of the resin composition is in the range from 0.4 to 60 g/10 minutes, and that the melt tension (MT) satisfies the following expression:

$$\log MT > -0.8 (\log MI) + 0.54 \qquad \text{Expression (1)}$$

The thermoplastic resin may freely be selected according to the object, and an alloy of a plurality of thermoplastic resins may be used. The resins include, for instance, polycarbonate (PC), polyamide (PA), polystyrene (PS), polypropylene (PP), polyethylene (PE), polyether, ABS, polyethylene phthalate (PET), polybutylene telephthalate (PBT), PMMA, SPS, PPS, PAR, polyether imide (PEI), polyether sulfone (PES), polyether nitryl (PEN), and various types of thermoplastic elastomers.

In order to improve dispersibility of the layered silicate, 0.01 to 30% by weight modified resin which is made from resin as main constituent by graft-polymerizing with acid anhydride such as maleic anhydride and fumaric acid may be blended assuming that the total weight of thermoplastic resin and modified resin as main constituent is 100% by weight.

Typical examples as layered silicate used in the present invention include clay mineral such as kaolinite, halloysite, montomorillonite, hectorite, illite, vermiculite, chlorite; black mica, white mica, bronze mica or the like.

Assuming that the total weight of the crystalline resin is 100 weight portions, the contents of the layered silicate is preferably in the range from 0.1 to 40 weight portions, and the content in the range from 1 to 20 weight portions is especially preferable. When less than 0.1 weight portions of layered silicate is contained, the layered silicate having the foam nucleus effect is too small in amount to foam homogeneously, and on the contrary, when more than 40 weight portions of layered silicate is contained, the effect for weight saving is lost and the melting viscosity of the resin becomes higher, thus foaming being disabled.

As described above, the resin foam (II) according to the present invention is characterized in that the resin foam has the average molecular diameter (major axis) of the layered silicate grains in the foam is 100 nm or below and shows no peak angle value detectable by means of wide-angle X ray diffraction (WAXS).

When the resin foam has the average molecular diameter (major axis) of not more than 100 nm, the physical characteristics such as the tensile force, elasticity modulus, and heat deformation temperature are drastically improved. Further, when the resin foam shows no peak angle value detectable by means of wide-angle X ray diffraction (WAXS), it means that the interlayer distance of the layered silicate dispersed in the resin composition or foam is not less than 20 Å, more preferably not less than 50 Å, and not less than 60 Å, in particular.

In the resin composition comprising a thermoplastic resin composition and a layered silicate not yet foamed, the layered silicate has the average molecular diameter (major axis) of 100 nm or below and shows no peak angle value detectable by means of wide-angle X ray diffraction (WAXS). The resin composition as described above is called nanocomposite, shows the effect that there are a number of fine foam nuclei, and is very preferable as a composite resin composition for foaming.

The effect described above becomes more remarkable when the layered silicate dispersed in the resin composition has the thickness in the range from 30Å to 500Å, and more preferably in the range from 50Å to 200Å.

The peak angle value by the wide-angle X ray diffraction (WAXS) was obtained by measuring the spaces between bottom faces under the conditions of; target CuKα ray, monochrome meter, voltage of 50 kV, current of 180 mA, scanning angle 2θ of 1.5° or more and not more than 40.0° , and step angle of 0.1° . The bottom face space of the layered silicate was calculated by applying the wide-angle X ray diffraction peak value into the Bragg's equation. When it was difficult to identify the wide-angle X ray peak angle, it was regarded that the inter-layer space become sufficiently large to lose the crystallinity, or that the peak angle value is not higher than about 1.5° and was hard to be identified, and in that case the bottom face space was assessed as 60Å or more. To explain more accurately, when this peak angel value can not be identified, it often occurs that the layers in the layered silicate are separated from each other and the silicate is in the state of mono-layer silicate.

As described above, in the resin composition comprising a thermoplastic resin composition and a layered silicate used in the present invention, the melt index (MI) is preferably in the range from 0.4 g/10 minutes to 60 g/10 minutes, and the melt tension (MT) preferably satisfies the following expression (1):

$$\log MT > -0.8(\log MI) + 0.54 \qquad \text{(Expression (1))}$$

When the melt index (MI) does not satisfy the expression (1), or when the melt index (MI) surpasses 60 g/10 minutes, foaming may lose the homogeneity. When the melt index (MI) is less than 0.4 g/10 minutes, foaming may not occur.

The resin foam (II) according to the present invention is preferably molded foam having the fine foaming structure produced by infiltrating a supercritical gas into nanocomposite comprising the thermoplastic resin composition and the layered silicate as described above before degassing. The foaming structure described above may be either independent foam having independent foaming cells or continuous foam not having the independent foaming cells. The latter includes the foam having the cyclic structure in which the resin phase and porous phase is formed in succession alternately and is interlaced with each other.

In the independent foam, the foam cell diameter along the major axis should be not larger than 10μm, and preferably not larger than 5μm. When the foam cell diameter is larger than 10μm, the merit of the so-called microcellular structure, namely the merit of fine foaming structure adapted to preservation of the original solidity before foaming may not sufficiently be achieved. Foaming scale in the resin foam is generally in the range from 1.1 to 3 times, and preferably in the range from 1.2 to 2.5 times.

In the continuous foam having the cyclic structure described above, a length of one cycle should preferably be not less than 5 nm and not more than 100μm, and preferably be not less than 10 nm and not more than 50μm. When the cycle length is more than 100μm, the foam structure may be too porous. When the cycle length is less than 5μm, the porous phase is too small, and in that case sometimes the merit of continuous foam such as, for instance, the filtering function may not be provided. There is no specific limitation over a foaming scale of the resin foam so long as its cyclic structure is preserved, but the scale is generally in the range from 1.1 to 3 times, and preferably in the range from 1.2 to 2.5 times.

Some examples of the method for producing the resin composition (nanocomposite) described above are provided below, but are not limited to the followings.

(Polymerization method)

Montomorillonite and ε-caprolactam ion-exchanged with ammonium salt of aminododecanoic acid are mixed at a given rate to swell silicate layers of montomorillonite at the temperature of 100°C. Then ring opening polymerization of caprolactam is forwarded at the temperature of 250°C between the layers, so that the layers extend along with the progress of polymerization to synthesize nylon 6/clay hybrid (NCH) in which montomorillonite layers are homogeneously dispersed in nylon 6.

(Kneading Method 1)

As described in Japanese Patent Laid-Open Publication No. HEI 9-183910, the method of kneading includes, for instance, a method in which, while the swelled layered silicate processed with a swelling agent having the onium ion group in the molecules thereof is mixed with resin in a kneader, the layered silicate is dispersed.

(Kneading Method 2)

The method of kneading includes a method in which, while a 2:1 type compound having the layer charge in the range from 0.1 to 0.7, for example, 0.01 to 40 weight portions of Na-4 silicon fluoride mica (layer charge: 0.6), 0.01 to 5 weight portions of a nucleus generating agent such as hydroxyaluminum bis (4-t-butylbenzoate), and 100 weight portions of thermoplastic resin such as polypropylene are melted and kneaded, the layered silicate is dispersed. The layered compound is preferably used after being brought into slurried solution together with organic silane compounds such as diethyldicyclosilane and then being pressured and filtrated.

(Examples as references)

The resin composition comprising polypropylene (PP)/ethylene propylene rubber (EPR)/ethylene-based copolymer/talc and often referred to as TSOP by those skilled in the art may be regarded as the elastomer-matrix type nanocomposite micro-dispersed therein crystals in elastomer. In addition, this TSOP may be regarded as a kind of nanocomposite because in the PP phase portion thereof, crystal lamellae about 10 nm thick forms micro domains, and between the lamellae exists the rubber phase (the phase in which the amorphous phase of PP and a portion of EPR are dissolved together) about 2 nm thick.

There is no specific limitation over the method according to the present invention so long as the method comprises a step of infiltrating supercritical gas into nanocomposite comprising a thermoplastic resin composition and layered silicate described above before degassing. Some examples of the method for producing the resin foam according to the present invention are described below.

The supercritical state used herein means the state showing the intermediate characteristics between those in the gaseous state and the liquid state. The supercritical state occurs when a temperature and a pressure of a gas surpass levels specific to the gas (critical points), and infiltration into the inside of the resin in the supercritical state becomes stronger and further homogeneous as compared to those in the liquid state. In the present invention, there is no specific limitation in the type of gas so long as the gas infiltrates into resin in the supercritical state. The gasses which may be used for this purpose include, for example, inert gas such as carbon dioxide, nitrogen, atmospheric air, oxygen, hydrogen, helium, or the like, and carbon dioxide and nitrogen are especially preferable.

The method for producing independent foam by infiltrating supercritical gas into resin composition and the device for the same are classified to the successive forming method in which the operations for molding the composition into a specific form and for degassing and foaming after infiltration of supercritical gas into the formed object are carried out separately; and to the batch foaming method in which the two operations described above are performed in succession. The production devices described in, for example, U.S. Patent No. 5158986, Japanese Patent Laid-Open Publication No. HEI 10-230528 or the like may be used in the present invention.

According to the present invention, in the method of injection or extrusion foaming in which a supercritical gas is infiltrated into the resin composition (nanocomposite) in the extruder, the gas is usually injected in the resin composition during kneading supercritical gas in an extruder. In this case, the temperature is preferably not lower than the melting point (Tm) of the resin composition and not less than (Tm + 50)°C, and after the infiltration, the temperature for cooling and degassing is preferably in the range of the crystallizing temperature of the composite resin composition (Tc) ±20°C. When cooled, the gas infiltrated in the resin goes out from the resin composition to the outside to generate successive spaces having fine and independent foaming cells or the cyclic structure therein.

When the temperature is less than the melting point of the resin composition, the resin composition can not sufficiently be mixed or kneaded, which disenables molding under the desired conditions. When the temperature is higher than (Tm + 50)°C, the composite resin composition may decompose.

If degassing of the resin composition infiltrated with supercritical gas is carried out outside the temperature range of (Tc±20)°C, excessively large bubbles may be generated, or crystallization of the composite resin composition may be insufficient with the strength and solidity lowered, even though the homogeneity in foaming is sufficient.

In the method of injection or extrusion foaming method (successive foaming method) described above, when the resin composition is molded in a die, it is especially preferable to reduce the pressure loaded to the resin composition, for instance, by filling the resin composition with the supercritical gas having been infiltrated therein in the molding box and moving back the die. With the operations as described above, foaming fault seldom occurs at a position near the gate, and the homogeneous foam structure can be obtained.

In the batch foaming method in which a molded product of the resin composition (nanocomposite) is placed in an autoclave filled with a supercritical gas so that the resin composition is infiltrated with the gas, preferably the supercritical gas is infiltrated into the resin composition in the gas atmosphere in the temperature range from (Tc - 20) to (Tc + 50)°C and is degassed at the temperature in the range of (Tc±20)°C. When the temperature is in the range of (Tc±20)°C during the infiltration, the pressure may be reduced keeping the temperature constant or the temperature may be slowly lowered. In brief, the temperature in the range of (Tc±20)°C should be maintained for a period of time sufficient for degassing. If degassing is carried out outside the temperature range of (Tc ± 20)°C, excessively large bubbles may be generated, or crystallization of the composite resin composition may be insufficient with the strength and solidity lowered, even though the homogeneity in foaming is sufficient.

Although the amount of gas to be filtrated is determined according to the target foaming scale, the scale may be in the range from 0.1 to 20% by weight, and preferably, in the range from 1 to 10% by weight against 100% by weight of the total weight of thermoplastic resin and layered resin either in the successive forming method or in the batch foaming method. There is no specific limitation over the period of time for gas to be filtrated and the period of time thereof may be selected depending on the infiltration method or the thickness of resin according to the necessity. When the filtration is carried out in the batch method, the necessary period of time may typically be from 10 minutes to 2 days, and preferably, from 30 minutes to 3 hours. When the filtration is carried out in the injection/extrusion method, the necessary period of time may be from 20 seconds to 10 minutes as the infiltration efficiency is enhanced.

Either in the successive forming method or in the batch foaming method, in order to obtain the foaming structure having homogeneous independent foam cells, it is preferable that the cooling rate of the resin composition described above is less than 0.5°C /sec, and the resin composition is cooled to its crystallization temperature or below. When the cooling rate surpasses 0.5°C/sec, there is the possibility of continuous foaming portion to be generated, which may hamper formation of homogeneous foaming structure.

Further, in order to obtain the foaming structure having homogeneous independent foam cells, the depressurizing rate of the resin composition described above is preferably less than 20 MPa/sec, more preferably, less than 15 MPa/sec, and especially preferably less than 5 MPa/sec. When the depressurizing rate is 20 MPa/sec or more, there is the possibility of continuous foaming portion to be generated, which may hamper formation of homogeneous foaming structure. According to our study, in addition, it was revealed that even when the depressurizing rate is 20 MPa/sec or more, spherical-shaped independent bubbles are easily formed if the cooling is not performed or the cooling rate is significantly slowed.

The method of producing foam having the cyclic structure in which the resin phase and porous phase is formed alternately and is interlaced with each other is now described below. The important point of the method is that gas in the supercritical state is infiltrated into the resin composition comprising crystal resin and layered silicate described above and the gas-infiltrated resin is subjected to rapid cooling and rapid depressurization substantially at the same time. With this operation as described above, the porous phase is formed after degassing and each of the porous phase and the resin phase forms continuous phase and the state in which the porous phase and the resin phase is interlaced with each other is maintained.

The method of infiltrating supercritical gas into resin and the device for the same can be carried out utilizing those used in the independent foam cell-type production method and device. Conditions of preferred temperature and pressure for infiltrating supercritical gas into resin composition can be similar to those in the independent foam cell-type production method and device.

Cooling after gas infiltration is performed at the cooling rate of at least more than 0.5°C/sec, preferably, more than 5°C/sec, and more preferably, more than 10°C/sec. The upper limit of the cooling rate is, though depending on the production method of resin foam, 50°C/sec in the batch foaming method, while 1000°C/sec in the successive forming method, When the cooling rate is less than 0.5°C/sec, porous phase is formed to be a spherical shape having independent bubbles, which disenables the function of combined porous structure to be fulfilled. When the cooling rate surpasses the upper limit, huge facilities for cooling system are required making the production cost of resin foam higher.

Further, depressurizing rate in the degassing process is preferably not lower than 0.5 MPa/sec, more preferably not lower than 15 MPa/sec, and especially preferably not lower than 20 MPa/sec and not higher than 50 MPa/sec. When depressurizing rate is finally decreased to be 50 MPa/sec or below after depressurization, porous phase is formed to be a spherical shape having independent bubbles, which disenables the function of combined porous structure to be fulfilled. When the depressurizing rate surpasses 50 MPa/sec, huge facilities for cooling system are required making the production cost of resin foam higher.

Depressurization and rapid cooling is carried out substantially at the same time. Substantially at the same time means that uncertainty is acceptable within the range in which the object of the present invention can be achieved. According to our study, however, it was revealed that there is no problem when rapid cooling of the gas-infiltrated resin is followed by rapid depressurizing, whereas, when only rapid depressurizing is carried out without cooling, spherical-shaped independent bubbles are easily formed in the resin.

**Brief Description of Drawings**

Fig. 1 shows resin foam according to an embodiment of the present invention, and Fig. 1(A) is an enlarged general perspective view showing a key section of the resin foam, and Fig. 1(B) is a two-dimensional simulated view showing the resin foam.

Fig. 2 is a flow chart showing the process of producing the resin foam according to an embodiment of the present invention.

Fig. 3 is a view showing a device for carrying out a method of producing resin foam according to an embodiment of the present invention (batch foaming method), and Fig. 3(A) is a general view showing a device used for carrying out a process for infiltrating a supercritical gas, while Fig. 3(B) is a general view showing a device for carrying out the cooling/depressurizing process.

Fig. 4 is a general view showing a device for carrying out a method of producing resin foam according to an embodiment of the present invention (successive forming method).

**Best mode for Carrying out the Invention**

Embodiments of the present invention are described below with reference to the related drawings.

[First Embodiment]

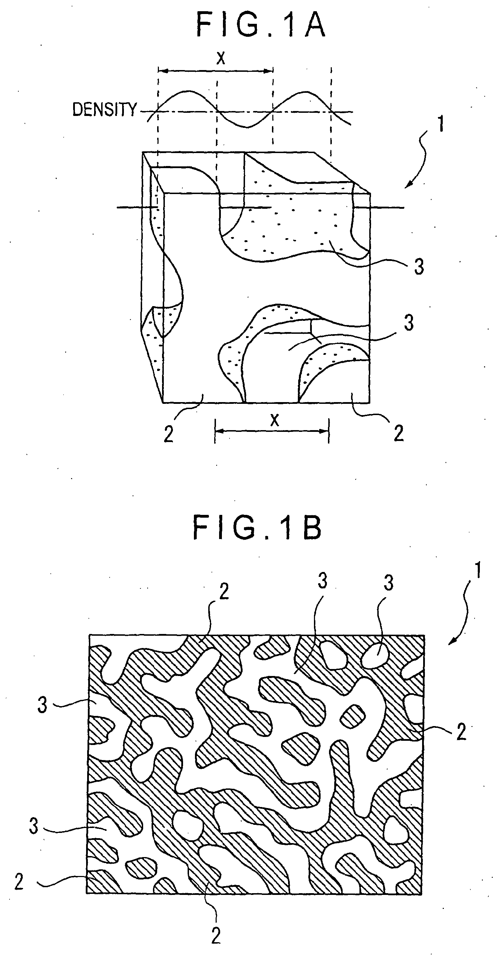

In Fig. 1, resin foam 1 is used in the field of injection molding of car parts or commodities for daily use. The resin foam 1 has a cyclic structure in which resin phases 2 (called as matrix phases) and porous phases 3 are formed in succession to each other and alternately and are interlaced with each other. This cyclic structure is called modulated structure, and wobble in densities of resin phase 2 and porous phases 3 changes cyclically. A length X of one cycle in this wobble is a length dimension for one cycle in the cyclic structure. In this embodiment, the length X of one cycle is not less than 5 nm and not more than 100 μm, and preferably not less than 10 nm and not more than 50 μm. The foam cell diameter along the major axis of this resin foam 1 is not more than 10μm.

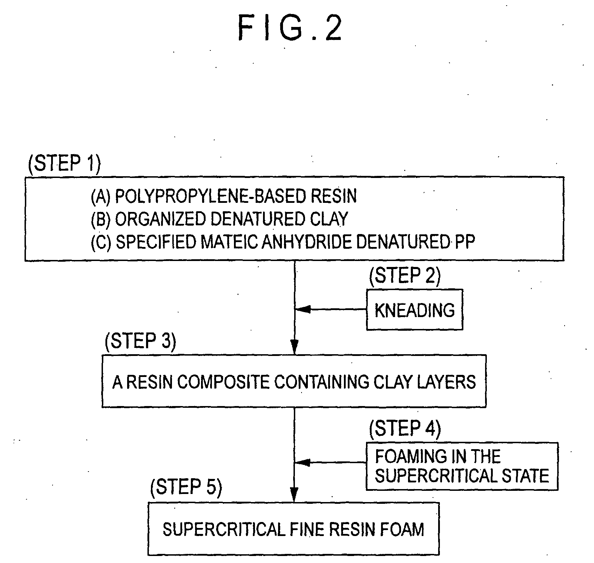

As shown in Fig. 2, this resin foam 1 is formed by foaming a composite resin composition comprising (A) a polypropylene-based resin by 100 weight portions, (B) organized denatured clay by 1 to 50 weight portions, and maleic anhydride denatured polypropylene by 0.5 to 30 weight portions, (C) the maleic anhydride satisfying the following conditions: (C-1) a quantity of maleic anhydride not reacted is outside a limit for quantitative analysis; (C-2) a ratio between the acid content and a number of polymer chains is in the range from 0.8 to 2.0; (C-3) the molecular weight distribution is not more than 2.5; (C-4) a content of components each having the molecular weight of 10,000 or below is not more than 0.5% by weight, and (C-5) the limit viscosity is 1 or more.

At first a raw material comprising the components described above is fully kneaded by the known method, for instance, with a blender (step 1), and then is mixed and kneaded with a two-shaft kneader (step 2).

Then the composite resin composition, which is a material obtained by melting and kneading a nanocomposite (Step 3), is infiltrated with a supercritical gas which is a gas in the supercritical state (step 4), and is subjected to degassing to obtain the resin foam 1 (step 5). There is no specific restriction over the methods of infiltrating and degassing this supercritical gas, and any method may be employed.

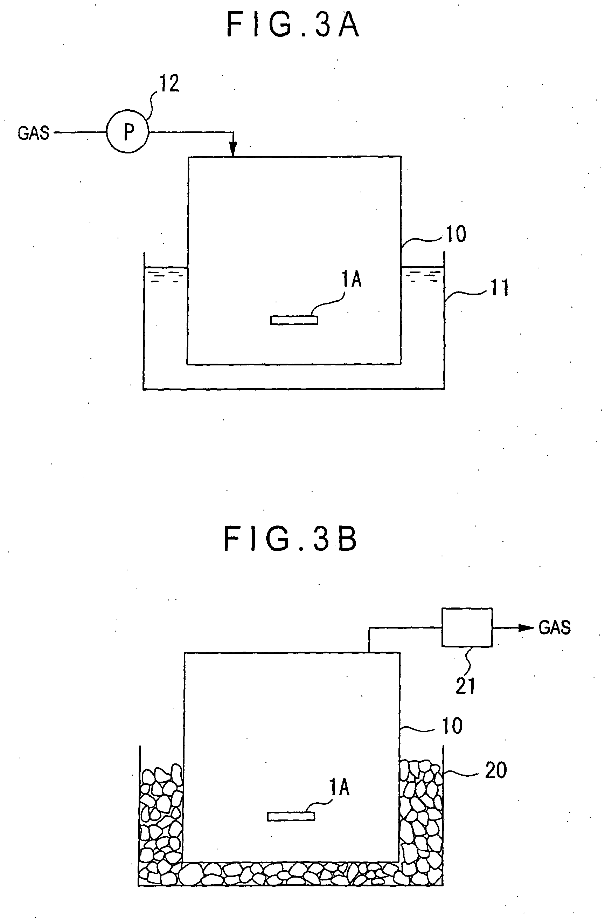

For instance, a production device based on the batch foaming method as shown in Fig. 3 may be used for producing the resin foam 1.

At first, in Fig. 3(A), a composite resin composition 1A comprising the organized denatured clay with the average molecular diameter of 150 nm or below and not showing a peak angle value detectable by means of wide angle X ray diffraction is placed in an autoclave 10 and is fused to a prespecified melted state. This autoclave 10 is steeped into an oil bath 11 for heating the composite resin composition 1A and a gas to be infiltrated in the composite resin composition 1A is fed into inside thereof with a pump 12.

Then in Fig. 3(B), the autoclave 10 was placed in an ice bath 20. The ice bath 20 has the structure allowing introduction or discharge of a cooling medium such as dry ice or a hot ware or oil to be gradually cooled therein or therefrom, and the composite resin composition 1A is cooled by cooling the autoclave 10.

Connected to the autoclave 10 is a pressure adjusting device 21, and by adjusting a quantity of gas discharged from the autoclave 10, a pressure inside the autoclave 10 is adjusted. In this embodiment, an ice box or a water bath may be used in place of the ice bath 20.

In this cooling step, the composite resin composition 1A with the supercritical gas infiltrated therein is cooled to the temperature of (Tc ±20)°C and degassed. When degassing is carried out at a temperature outside the range of (Tc ±20)°C, excessively large bubbles may be generated, and even though foaming occurs homogeneously, crystallization of the composite resin composition 1A is insufficient, which may lower strength or solidity thereof.

In this embodiment, when the resin foam 1 having independent foaming cells is to be obtained, degassing is required to be carried out at least either in the state where the composite resin composition 1A has been cooled, or in the depressurized state. When the resin foam 1 having the cyclic structure as shown in Fig. 1, the composite resin composition 1A with the gas infiltrated therein is rapidly cooled and also depressurizing must be carried out at the substantially same time.

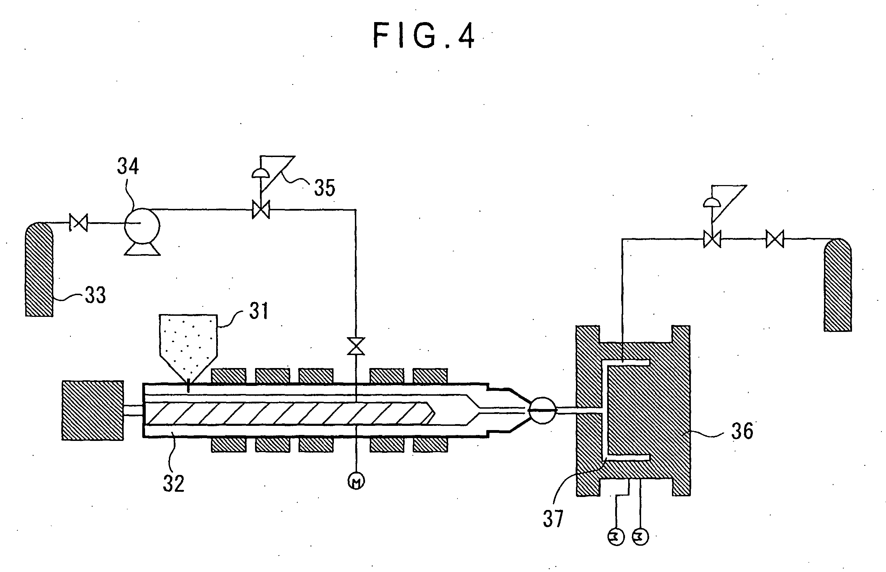

For producing the resin foam 1, also the production device based on the successive forming method as shown in Fig. 4 may be used.

At first, the composite resin composition described above is injected from a hopper 31 into an injection molding machine. Then such gasses as carbon dioxide or nitrogen released from a gas cylinder 33 is pressurized to the critical pressure as well as to the critical temperature with a pressurizing machine, then a control pump 35 is opened to blow the gas into the injection molding machine 32 for infiltrating the supercritical gas into the composite resin composition.

The composite resin composition with the supercritical gas infiltrated therein is filled, for instance, in a cavity 37 of a die 36 as a molding box. When the composite resin composition flows into the cavity 37 of the die 36 and a pressure loaded to the composite resin composition is reduced, the infiltrated gas may be degassed before the composite resin composition completely fills the cavity 37 of the die 36. To prevent this phenomenon, a counter pressure may be loaded. When the composite resin composition fills the cavity of the die completely, for instance, the die cavity is drawn back to reduce the molding pressure loaded to inside the cavity of the die. With this operation, the pressure loaded to the composite resin composition rapidly drops, and degassing is promoted. With the operations as described above, foaming fault seldom occurs at a place near the gate, and the resin foam having the homogeneous foam structure can be obtained.

A quantity of the gas to be infiltrated is decided according to the desired foaming scale.

In the present invention, in either the successive forming method or the batch foaming method, a quantity of the gas to be infiltrated is set to the range from 0.1 to 20% by weight, and preferably in the range from 1 to 10% by weight assuming that the total weight of the composite resin composition is 100% by weight. There is no specified restriction over the time for infiltrating the gas, and the time can be adjusted according to the infiltrating method or the desired thickness of the resin. There is the correlation that , when a quantity of infiltrated gas is large, the cyclic structure becomes larger, and when the quantity is small, also the cyclic structure becomes smaller. When infiltration is carried out in the batch system, the time is generally from 10 minutes to 2 days, and preferably from 30 minutes to 3 hours. When the injecting or extruding method is employed, the infiltration efficiency is high, so that the time from 20 seconds to 10 minutes is sufficient.

In either the successive forming method or batch foaming method, to obtain the foam structure having homogeneous foaming cells, the cooling rate for cooling the composite resin composition 1A should be set to less than $0.5°C/sec$. When the cooling rate is $0.5°C/sec$ or more, in addition to the independent foaming cells, continuous foaming sections may be generated, which makes it difficult to obtain a homogenous foam structure. To avoid this phenomenon, it is preferable to set the cooling rate for the resin composition to less than $0.5°C/sec$.

On the other hand, to obtain a foam structure having continuous foaming cells, the cooling after gas infiltration should be carried out at the cooling rate of at least $0.5°C/sec$ or more, preferably at the cooling rate of $5°C/sec$ or more, and more preferably at the cooling rate of $10°C/sec$. When the cooling rate is less than $0.5°C/sec$, the porous phase is formed into a spherical form having an independent bubble, which disenables the function of combined porous structure. On the other hand, when the cooling rate surpasses the upper limit value, the large and complicated cooling device is required, which makes the production cost of the incombustible foam higher.

Further to obtain the foam structure having homogeneous independent foaming cells, the depressurizing rate for the resin composition is preferably less than 20 MPa/sec, more preferably less than 15 MPa/sec, and especially preferably less than 0.0 MPa/sec. When the depressurizing rate is 20 MPa/sec or more, in addition to independent foaming cells, continuous foaming portions may be generated, which sometimes makes it difficult to obtain a homogeneous foam structure. As a result of studies by the inventors, it was found that, when the depressurizing rate is 20 MPa/sec or more, if cooling is not carried out, or if cooling is carried out at an extremely low cooling rate, spherical independent bubbles are easily generated.

[Example of testing in the first embodiment]

Effect provided by the present invention are described below with reference to specific examples. It is to be noted that the present invention is not limited to the examples described below.

At first production of the maleic anhydride denatured polypropylene is described.

The maleic anhydride denatured polypropylene s produced through (1) the step of preparing a solid catalyst component, (2) the preparatory polymerization step, and (3) the step of polymerizing propylene.

(1) Preparation of solid catalyst component

A three-port flask equipped with an agitator having the internal volume of 0.5 L was substituted with a nitrogen gas, and 60 ml of octane having been dehydration and 16 grams of diethoxy magnesium were added therein. Then the mixture was heated to $40°C$, 2. 4 ml of silicon tetrachloride was added, the obtained mixture was agitated for 20 minutes, and then 1.6 ml of dibutyl phthalate was added. This solution was heated to $80°C$, 77 ml of titanium tetrachloride was added by dripping, and further the solution was agitated fro 2 hours at the internal temperature of $125°C$. Then agitation was stopped to precipitate solids, and the supernatant was removed. Then, 100 ml of dehydrated octane was added, the mixture was heated to $125°C$ agitating and was kept at the temperature for 1 minute. Then agitation was stopped to precipitate the solids and the supernatant was removed. This cleaning operation was repeated 7 times. Further 122 ml of titanium tetrachloride was added, and the mixture was agitated for 2 hours at the internal temperature of $125°C$ to carry out the second contact operation. Then the cleaning operation with the dehydrated octane at the temperature of $125°C$ was repeated 6 times, and the solid catalyst component was obtained.

(2) Preparatory polymerization

A three-port flask equipped with an agitator having the internal volume of 0.5 L was substituted with a nitrogen gas, and then 400 ml of heptane having been subjected to dehydration, 25 mmol of triisobutyl aluminum, 2.5 mmol of dicyclopentyl dimethoxysilane, and 4 g of the solid catalyst component obtained in the process (1) were added. And the internal temperature was raised to 50°C and propylene was indtroduced under agitation. Agitation was continued for 1 hour and then stopped, and as a result a preparatorily polymerized catalyst component with 4 g of propylene per 1 g of solid catalyst polymerized was obtained.

(3) Polymerization of propylene

An stainless autoclave equipped with an agitator having the internal volume of 6 l was fully dried, substituted with nitrogen gas, and 6 l of dehydrated heptane, 12.5 mmol of triethyl aluminum, and 0.3 mmol of dicyclomethyl dimethoxysilane were added. Nitrogen within the reaction system was substituted with propylene, and propylene was introduced under agitation. After the propylene was stabilized with the pressure of 8 kg/cm$^2$ G and at the internal temperature of 80°C, 50 ml of heptane slurry containing 0.08 mmol of the preparatorily polymerized catalyst component obtained in the process (2) above introduced therein via substitution with Ti atom was added, and the obtained mixture was polymerized at the temperature of 80°C for 3 hours continuously feeding propylene. After completion of the polymerization, 50 ml of methanol was added, and the mixture was cooled and depressurized. Then all of the content was removed to a filtering bath with filter, and was heated there to 85°C to separate solid phase from the liquid phase. Further the solid portion was cleaned twice with 6 l of heptane at the temperature of 85°C, and vacuum-dried to obtain 2.5 kg of homopolypropylene. The limit viscosity [η] of the obtained homopolypropylene was 7.5 dl/g at 135°C in decaline.

(4) Generation of maleic anhydride denatured polypropylene

3 Kg of the homopolypropylene obtained in the process (3) above, 36 g of maleic anhydride (produced by Wako Junnyaku K. K., special class), 6.0 g of 2,5-dimethyl-2,5-bis(t-butylperoxy) hexine (produced by Nippon Yushi K. K., product name: Perhexine 25B-40) as an organic peroxide, Irganox 1010 (product name) and Irgafos 168 (product name) both produced by Chiba Geigy Co. and each as an antioxidant, with the densities of 600 ppm and 1400 ppm respectively, and a calcium stearate with the density of 500 ppm as an additive were dry-blended therein. This dry-blended raw material was heated and kneaded with Laboplast mill two-shaft kneader/extruder manufactured by Toyo Seiki K. K. The kneading operation was carried out under the conditions of cylinder temperature of 180°C, die temperature of 200°C, rotating speed of 140 rpm, and discharge rate of 3 kg/h.

The resin strand discharged from the cylinder was immediately introduced into water, cut into fine pieces with a cutter with a drawing device to obtain the desired composite resin composition pellets. 1 kg of the obtained pellets were put in a three-port separable flask with the internal volume of 5 l and dipped in a mixture of 1. 5 l of n-heptane and 1.5 l of acetone, and processed for 2 hours mechanically agitating and recycling the solvent having the temperature of 80°C. Then the mixture was injected into 5 l of methanol while it was hot, and was left in the state overnight. Then the supernatant was filtered off, and the polymer was dried at 80°C in the depressurized state to obtain maleic anhydride denatured polypropylene. The yield from this 1 kg of pellets was 9550g.

The characteristics of the maleic anhydride denatured polypropylene is described below.

The characteristics of the maleic anhydride denatured polypropylene obtained as described below is as described below.

(1) Ratio of acid content against a number of polymer chains (Acid content/number of polymer chains: β): 1.11
(2) Molecular weight distribution (Mw/Mn): 1.99
(3) Content of components each having the molecular weight of 10000 or below (LP factor): 0.2% by weight
(4) Limit viscosity [η]: 1.34 dl/g

The molecular distribution and LP factor were measured by the Gel Permeation Chromatography (GPC) method. The conditions for measurement by the GPC method are as described below:

* Column: Manufactured by Toso K. K., Product name: GMHHR-H(S)HT
* Measurement temperature: 145°C
* Flow rate: 1.0 ml/minute
* Analytical curve: Universal calibration
* Detector: Produced by Waters, Product name: Waters 150C

A quantity of not-reacted maleic anhydride obtained by the above-described production method was measured by the method described above. Quantification by the NMR showed that the content of the maleic anhydride not reacted yet was 0.046 mole %, and therefore it was determined that the content was outside the limit for measurement.

Composite resin compositions suited to supercritical fine foaming are discussed below.

[Example 1]

(Preparations of the sample)

2 g of the specific maleic anhydride denatured polypropylene obtained in the production process described above and satisfying the specific requirements, 17 g of homopolypropylene (produced by Idemitsu Sekiyu Kagaku K. K.,: Product name: H100M), and 1 g of organized denatured clay (produced by Nanocor, Product name: Cloisite 6A) were put in a polyethylene bag with chuck, and were dry-blended. The mixture was injected into Laboplast mill plapender mixer manufactured by Toyo Seiki K. K. with the internal volume of 30 ml, and was kneaded and mixed for 5 minutes at the rotating speed of 50 rpm at 210°C. The mixture was took out from the vessel while it was still hot, and was cooled to the room temperature. Further the mixture was molded to a body with the area of 60 mm x 60 mm and the thickness of 300 μm with a hot pressing machine at 210°C, and a portion of this molded body was cut off and processed into a film-like sample for foaming test.

(Characteristics of the sample)

The inorganic filler content in the sample obtained above was 3.8% by weight, the melt index (MI) was 20 g/10 minutes, and the melt tension (MT) was 0.8 g. Measurement of the sample's characteristics was performed by assessing distribution of clay components by means of the spectroscopic measurement.

* Measurement of the bottom face space by means of wide-angle X ray diffraction (WAXS)

Using an X ray generator (manufactured by Rigaku Denki K. k., Product name: RJ200), the bottom face space was measured under the conditions of the target: CuKα ray, monochrome meter, voltage of 50 kV, current of 180 mA, scanning angle 2θ of 1.5° or more and not more than 40.0°, and step angle of 0.1°. This bottom face space was calculated by substituting the wide-angle X ray diffraction peak angle value into the Bragg's equation. As the wide-angle X ray peak value was hardly recognized, it was determined that the layers were fully separated from each other and the crystallinity was substantially lost, or that the peak angle value was not more than about 1.5 degrees and was hardly recognized, and based on the recognition above, the bottom face space was assessed as 60 Å or more.

* Measurement of clay distribution with a TEM (Transmission Electron Microscope)

An ultra thin slice with the thickness of about 130 nm was used. Distribution of the clay composite was monitored and photographed with a transmission electron microscope (produced by Nippon Denshi: JEM-1010) under the acceleration voltage of 100 kV and at the resolution in the range from 40000 times to one million times. Regions, in each of which 100 or more distributed particles were present, were selected, and a number of particles, thickness and length of the layer in each region were measured manually with a graduated ruler or with the NIH Image V. 1.57 from the US National Sanitary Institute according to the necessity. As a result, it was observed that the clay was homogeneously distributed in the polypropylene resin which was a matrix resin comprising a plurality of layers completely separated from each other and each having the thickness of 1 nm and the length of 100 nm.

* Measurement of melt tension, melting point, and crystallizing temperature

The melt tension was measured with a capillograph produced by Toyo Seiki K. K. The conditions for measurement were as follows: the capillary form: diameter = 2.095 mm, length = 8.0 mm; inflow angle = 90 degrees; cylinder diameter = 9.0 mm; extrusion rate = 10 mm/min; wind-up speed = 3.14 m/min. The melting point measured by the DCS method under the conditions as described above was 173°C, and the crystallizing temperature was 155°C.

(Molding of resin foam with supercritical gas)

The film-like sample obtained in the process described above was placed in an autoclave of a supercritical foaming apparatus with the internal volume of 40 mmφ x 150 mm. Then the pressure was raised to 15 MPa with a supercritical fluid of carbon dioxide at the room temperature, and then the autoclave was dipped in an oil bath under the infiltration temperature conditions as shown in Table 1 below and was kept in the state for one hour to infiltrate the carbon dioxide in the sample. Then, the pressure value was opened at the prespecified temperature to make the pressure drop to the atmospheric pressure, and the autoclave was dipped in a water bath to obtain a foam film which was resin foam.

(Assessment of characteristics of the foam sample)

The average diameter (along the major axis) of bubbles (cells), bubble density (Cell density), and homogeneity of the bubbles in the foam film obtained as described above were assessed. The average diameter of the bubbles and bubble density were assessed by the common method from the cross-section thereof photographed with an SEM (Scanning Electron Microscope). The homogeneity of bubbles was visually assessed from the SEM photographs. A result of the assessment was shown in Table 2.

Table 1

| | Method of producing nanocomposite PP | | | Kneading conditions | | Melt characteristics | | Conditions for infiltration | | | Foaming | |
|---|---|---|---|---|---|---|---|---|---|---|---|---|
| | Filler/ maleic anhydride PP | Production method | Content of inorganic materials (%) | Temperature (°C) | Revolution speed (rpm) | MI (g/10 min) | MT (g) | Temperature (°C) | Pressure (MPa) | Time | Degassing temperature (°C) | Used gas |
| Example 1 | Organized denatured clay/ specific one | Kneading method | 3.8 | 210 | 50 | 20.0 | 0.6 | 200 | 15 | 2 hours | 140 | $CO_2$ |
| Example 2 | Organized denatured clay/ specific one | Kneading method | 4.2 | 200 | 400 | 60.0 | 0.1 | 210 | 15 | 120 second | 100 | $N_2$ |
| Comparative Example 1 | Organized denatured clay/ commercial item | Kneading method | 3.9 | 210 | 50 | 4.0 | 1.6 | 200 | 15 | 2 hours | 140 | $CO_2$ |
| * 1: The commercial item "U-mex 1001" was used as the maleic anhydride PP in CoMParative Example 1. | | | | | | | | | | | | |

Table 2

| | Distributed structure | | Conditions for infiltration | | |
|---|---|---|---|---|---|
| | Aspect ratio | Bottom face space (Inter-layer space) | Average gain diameter (μm) | Cell elasticity density (piece/cm$^3$) | Specific modulus (MPa)*2 |
| Example 1 | 100 | over 60Å | 3 | $7.5 \times 10^9$ | 3200 |
| Example 2 | 120 | over 60Å | 4 | $8.5 \times 10^9$ | 3320 |
| Comparative Example 1 | 20 | 50Å | 50 | $4.0 \times 10^8$ | 2500 |

*2 The specific elasticity modulus was calculated with the Vibron meter from the viscosity and elasticity characteristics as well as from the density.

[Example 2]

(Preparation of the sample)

700 g of the maleic anhydride denatured polypropylene obtained in the process described above, 5950 g of homopolypropylene (produced by Ideinitsu Sekiyu Kagaku K. K.; Product name: J3000GV), 350 g of organized denatured clay (produced by Nanocor, Product name: Cloisite 6A), and Irganox 1010 (Product name) and Irgafos 168 (Product name) by 10.5 g and 7 g respectively each produced by Chiba Geigy Co. were dry-blended. The dry-blended materials were put in the two-shaft kneader/extruder TEM-35 (Product name) produced by Toshiba Kikai K. K., and was molded under the operating conditions of cylinder temperature: 180°C, die temperature of 200°C, rotating speed of the screw: 400 rpm, and discharge rate: 20 kg/h. The resin strand discharged from the cylinder was immediately guided into water, cut into fine pieces with a cutter equipped with a drawing device to obtain desired pellets of the composite resin composition.

(Characteristics of the sample)

Measurement of the composite resin composition obtained as described above was carried out by assessing distribution of the clay by means of spectroscopic measurement as described below.

* Measurement of bottom face space by wide-angle X ray diffraction (WAXS)

The bottom face space was measured like in Example 1 described above. As a result of assessment of the bottom face space, it was determined like in Example that the bottom face space was 60 Å or more.

* Measurement of distribution of the clay with a TEM

Measurement was carried out like in Example I described above. As a result, it was observed that the thickness of the clay layer was 1 nm, the layer length was about 100 nm, and the layers were separated from each other and were homogeneously distributed in the polypropylene resin as a matrix resin.

* Measurement of the molting point and crystallizing temperature

Measurement was carried out like in Example 1 above. The melting point was 162°C and the crystallizing temperature was 120°C.

(Molding of resin foam with a supercritical gas)

The pellets of the composite resin composition obtained in the process above was injection-molded with a supercritical injection molding machine. As a die, the IEM assessment type die owned by Idemitsu Sekiyu Kagaku K. K was used, and injection was carried out under the conditions of thickness t : 2 mm, molding temperature: 210°C, die temperature: 10°C, and content of nitrogen as a supercritical fluid: 0.6% to obtain a molded body for assessment test as resin foam.

17

(Assessment of the characteristics of the foam sample)

The molded body for assessment test obtained by injection molding was cut into pieces, and the average diameter (major axis), bubble density (cell density), and homogeneity of the bubbles were assessed like in Example 1. The result is shown in Table 2.

[Comparative Example]

(Preparation of the sample)

1.0 g of organized denatured clay (produced by Naconor Co., :Product name: Cloisite 6A), 14.5 g of homopolypropylene (produced by Idemitsu Sekiyu Kagaku K. K., Product name: H100M), and 4.5 g of maleic denatured polypropylene oligomer (produced by Sanyo Kasei K. K., Product name: U-mex 1001) were dry-blended in a mortar. The dry-blended materials were injected into Laboplast mill plapender mixer produced by Toyo Seiki K. K and having the internal volume of 30 ml, and were kneaded and mixed for 5 minutes at the rotating speed of 50 rpm at 210°C. While the materials were still hot, the materials were took out and cooled to the room temperature. Further the materials were molded into a molded body with the area of 60 mm x 60 mm and the thickness of 300 μm with a hot pressing machine at 210°C, and a portion of the molded body was cut off to obtain a film-like sample for foaming test.

(Characteristics of the sample)

A content of inorganic filler in the sample obtained as described above was 3.9% by weight, the melt index (MI) was 4.0 g/10 minutes, and the melt tension (MT) was 1.6 g. Measurement of the characteristics of the sample was carried out by assessing distribution of the clay by means of the spectroscopic measurement as described above.

* Measurement of the bottom face space by wide-angle X ray diffraction (WAXS)

Measurement of the bottom face space was carried out like in Example 1 and Example 2 described above. As a result of assessment of the bottom face space, it was determined like in Example 1 and Example 2 that the bottom face space was 60 Å or more.

* Measurement of distribution of the clay with a TEM

The measurement was carried out like in Example 1 and Example 2 described above. As a result, it was determined that the thickness of the clay layer was 8 nm and the layer length was about 200 nm, but that the layers were not completely separated from each other. Also it was observed that 4 to 10 layers, and even 20 layers were present in the laminated state and the laminated layers were heterogeneously distributed within the polypropylene as a matrix resin.

(Molding of resin foam with a supercritical gas)

The film-like sample obtained in the process above was infiltrated with carbon dioxide as a supercritical fluid to obtain a foamed film.

(Assessment of the characteristics of the foamed sample)

The average diameter (major axis), bubble density (Cell density) and homogeneity of the bubbles in the obtained foamed film were assessed like in Example 1 and Example 2. The result is shown in Table 2.

[Result of experiments]

It is recognized from the result shown in Table 2 and also by comparing Comparative Example 1 in which the commercially available maleic anhydride denatured polypropylene was used to Example 1 and Example 2 in which a prespecified maleic anhydride denatured polypropylene was used that the average diameter of bubbles in Example 1 and Example 2 was 1/10 or below of that in Comparative Example 1. Further it was recognized that the bubble densities in Example 1 and Example 2 were about 20 times larger than that in Comparative Example 1 to provide the better foam structure, and also that the specific elasticity modulus was larger with the solidity higher.

[Second Embodiment]

In this embodiment, the resin composition comprising a thermoplastic resin to be foamed and a layered silicate can be produced by the method described in the example below as well as by the method similar to that described in Japanese Patent Laid-Open Publication No. HEI 9-183910.

It is preferable to use a resin composition having the melt tension (MT) satisfying the expression of "log MT > -0.8 (log MI) + 0.54". The nanocomposite satisfies the expression above, but a thermoplastic resin bridged by irradiating an electron beam or a radioactive ray may be used (The bridging may be carried out by the production method described, for instance, in Japanese Patent Publication No. HEI 7-45551).

This resin composition is foamed to obtain foam having the cyclic structure in which a major axis of each foaming cell is not more than 10 μm and the cycle is in the range from 5 nm to 100μm and the average grain size of layered silicate in the foam is not more than 100 nm, and not showing a detectable peak angle by wide-angle X ray diffraction.

The method of molding the foam as described above is described below.

Of the resin foams according to the present invention, the independent foam has the same structure as those of known foams each having independent foaming cells. The independent foam according to the present invention is characterized, however, in that the major axis of the foaming cell is very small, namely not more than 10μm. The independent foam according to the present invention is not shown in the figures.

As the resin foam according to this embodiment of the present invention, the resin foam according to the first embodiment of the present invention (See Fig. 1) may be used. The resin foam 1 is as described in the first embodiment, so that detailed description thereof is omitted herefrom.

For producing the resin foam 1 according to this embodiment, the production device based on the batch system described in the first embodiment (See Fig. 3) may be used.

In Fig. 3(A), a prespecified resin composition 1A is placed inside the autoclave 10. This autoclave 10 is dipped in an oil bath 11 for heating the resin composition 1A, and a gas to be infiltrated in the resin composition 1A is fed by a pump 12 into inside of the autoclave 10.

In this embodiment, the resin composition 1A is heated to the temperature range from 'the crystallizing temperature (Tc) - 20) to (Tc + 50)°C. With this operation, the resin composition 1A is placed in the gas atmosphere in the supercritical state.

In Fig. 3(B), the autoclave 10 as a whole is placed in an ice bath 20. This ice bath 20 has the structure making it possible to introduce therein or discharge therefrom a cooling medium such as dry ice, or hot water or oil for gradually cooling the materials therein, and by cooling the autoclave 10, the resin composition 1A is cooled.

Connected to the autoclave 10 is a pressure adjuster 21, and by adjusting a quantity of the gas discharged from the autoclave 10, the internal pressure inside the autoclave 10 is adjusted. It is to be noted that an ice box may be used in place of an ice bath in this embodiment.

In this embodiment, when it is necessary to obtain foam having independent foaming cells, degassing is carried out by cooling and/or degassing the resin composition 1A infiltrated with a gas. When it is necessary to obtain foam having the cyclic structure as shown in Fig. 2, degassing is carried out by rapidly cooling the resin composition 1A infiltrated with a gas and at the same time degassing the composition 1A almost simultaneously.

The conditions for cooling rate and degassing rate for the resin composition 1A are as those described above.

The production device based on the continuous foaming device as described in the first embodiment above (See Fig. 4) may be used for producing the resin foam 1 according to the present invention.

At first, a resin composition (nanocomposite) previously produced by the polymerization method, kneading method, or the method described in the examples as references above and comprising a thermoplastic resin by 100 weight portions and a layered silicate by 0.1 to 40 weight portions, having the average grain size of the layered silicate in the resin composition of 100 nm or below, and not showing any peak angle value in wide-angle X ray diffraction is injected from a hopper31 into an injection molding machine. Or, as described in the kneading methods 1 or 2 above, a thermoplastic resin, a layered silicate, and, if necessary, a core-generating agent may be injected from the hopper 31 into the injection molding machine 32 to infiltrate a supercritical gas in the mixture producing the nanocomposite.

By raising a pressure and a temperature of a gas from the gas cylinder 33 such as carbon dioxide or nitrogen with a pressurizing machine 34 to the critical pressure and to the critical temperature or more and opening a control pump 35 to blow the gas into the injection molding machine 32, the supercritical gas is infiltrated in the resin composition (nanocomposite).

The resin composition infiltrated with the supercritical gas is filled in the cavity 37 of the die 36. When the resin composition flows into the cavity 37 and a pressure loaded to the resin composition drops, the gas infiltrated in the resin composition may go out of the resin composition before the cavity is completely filled with the resin composition. To prevent this phenomenon, a counter pressure may be used.

After the cavity is completely filled with the resin composition, by reducing the embossing pressure loaded to inside of the cavity 37 of the die 36, the pressure loaded to the resin composition is rapidly reduced and the degassing is promoted.

[Examples for the Second Embodiment]

To ascertain the effects provided in this embodiment, the examples are described. It is to be noted that the present invention is not limited to the examples described below.

[Example 3]

(Example of production of silane-processed clay slurry)

4 l of distilled water was put in a three-port flak with the internal volume of 5 l, and 20 g of fluorine quad silicon mica (produced by Corp Chemical Co., Product name: Somashiff) was gradually added thereto under agitation by a stirrer. After the addition, agitation was carried out for one hour at the room temperature to prepare a colloidal solution of the clay.

Then 8 ml of diethyl chlorosilane was gradually dripped into the colloidal solution of the clay. Then the colloidal solution was heated to 100°C and was agitated for 4 hours at the temperature. During this step, the colloidal solution changed to a slurried solution of the clay. This slurried solution was hot-filtered with a pressurizer (with the air pressure of 0.5 MPa, a membrane filter with the pore diameter of 3 μm used). The time required for filtering was 7 minutes.

The obtained filtrate was dried at the room temperature, and 10 g of the dried filtrate was suspended in 250 ml of toluene, and further 250 ml of triisobutyl aluminum solution in toluene (0.5 mol/l) was added therein, and the mixture was agitated for one hour at 100°C to obtain the slurry.

The obtained slurry was cleaned with toluene, and then toluene was added to adjust the total volume of the solution to 250 ml to obtain a slurry of silane-processed clay.

(Example of production of a clay-containing thermoplastic resin composition by polymerization)

400 ml of toluene, 0.5 millimole of triisobutyl aluminum, and 10 ml of the silane-processed clay slurry (containing the silane-processed clay by 1.0 g) were successively put in an autoclave with the internal volume of 1.6 l, and the mixture was heated to 70°C. The mixture was kept at the temperature for 5 minutes, and then 0.6 ml of dimethyl scilliren bis (2-methy-4-benzoindenil) zirconium dichloride solution suspended in heptane (1 μ mole/milliliter of heptane) was added. Then the reaction pressure was gradually raised continuously feeding the propylene gas so that the internal temperature was set in the range from 70 to 71°C. The operation for raising the pressure was stopped when the reaction pressure reached 0.7 MPa (gauge pressure). Then introduction of the propylene was stopped in 18 minutes, and methanol was added to stop polymerization. Then the obtained resin composition was filtered for separation, and the filtrate was dried for 12 hours at 90°C in the depressurized state. As a result, 26.3 g of resin composition was obtained, and a content of the inorganic filler therein was 3.8% by weight.

(Example of production of a molded body for foaming and characterization thereof)

The resin composition was subjected to shearing with Laboplast mill produced by Toyo Seiki K. K while heating at 210°C for 5 minutes. The kneaded resin composition was molded with a hot pressing machine to a form with the area of 60 mm x 60 mm and the thickness of 300 μm at 210°C, and a portion of the molded resin composition was cut off to use as a sample in the foaming test, and the various characteristics were measured.

(1) MI: 3.5 g /10 minutes (230°C - 2.16 kg load)
(2) Melt tension MT: 1.8 g (Capillogram produced by Toyo Seiki K. K. used. Form of the capillary: diameter = 2.095 mm, length = 8.0 mm; inflow angle = 90°C, cylinder diameter: 9.0 mm, extrusion rate: 10 mm/min, wind-up rate: 3.14 m/min)
(3) Measurement of bottom face space by wide-angle X ray diffraction (WAXS)
Using an X ray generator (produced by Rigaku Seiki, J200), the bottom face space was measured under the conditions of target CuKα ray, a monochrome meter, voltage: 50 kV, current: 180 mA, scanning angle $2\theta$= 1.5 to 40°, and step angle = 0.1°. The bottom face space was calculating by applying the wide-angle X ray diffraction peak value in the Bragg's expression. When the wide-angle X ray peak value could not be identified, it was regarded that the layers were substantially separated from each other and the crystallinity disappeared, or that the peak angle value was about 1.5° or below and therefore could not be identified, and in this case the bottom face space was assessed as 60 Å or more.

(4) Measurement of distribution of the clay

A slice with the thickness of about 133 nm was used. With a transmission electronic microscope (produced by Nippon Denshi K. K.: JEM-1010), distributed state of the clay composite was monitored and photographed at the resolution from 40,000 to 1,000,000 times under the acceleration voltage pf 100 kV. Regions in which one million or more pieces of distributed particles were present were selected, and a number of particles, the layer thickness and layer length in each region were manually measured with a calibrated scale, or with the NIH V 1.57 from the US National Hygiene Institute according to the necessity. The average aspect ratio was obtained as a numeric average of the layer thickness and layer length of each clay composite. The average aspect ratio was determined as 100.

(Example of foam molding with a supercritical gas)

The obtained film was placed in an autoclave (with the internal dimensions of 40 mmϕ x 150 mm) of the supercritical foaming device described in Fig. 3, the pressure was raised to 15 MPa with a supercritical fluid of carbon dioxide at the room temperature, the autoclave was dipped in an oil bath under the temperature condition for infiltration as shown in Table 3 (Example 3) and kept in the state for one hour, and then carbon dioxide was infiltrated. Then, the pressure valve was opened at a prespecified temperature for degassing for 7 seconds to the atmospheric pressure, when the autoclave was dipped in a water bath for cooling to obtain a foam film.

The average diameter (major axis) of the bubbles in the obtained foam film and the bubble density (cell density), and homogeneity of the bubbles (cells) were assessed. The average diameter (major axis) and the bubble density (cell density) were assessed by the ordinary method from a photograph of a cross taken with a SEM photograph. The homogeneity of the bubbles (cells) were visually assessed from the SEM photograph.

[Example 4]

(Example of production of a molded body for foaming -1-)

18.5 g of homopolypropylene (produced by Idemitsu Sekiyu Kagaku K. K. , grade name: H100M), 0.5 g of hydroxyl aluminum bis (4-t-butyl benzoate), and 1 g of synthesized hectorite (produced by Corp Chemical K. K.; Product name: SWN) were put in an agate mortar, and were lightly blended. The mixture was removed to Laboplast mill (with the internal volume of 30 cc) produced by Toyo Seiki K. K, and were kneaded and mixed for 5 minutes at 210°C. While the mixture was still hot, the mixture was took out from the vessel and gradually cooled to the room temperature. The mixture was molded to a form with the area of 60 mm x 60 mm and the thickness of 300 μm with a hot pressing machine at 210°C, and a portion of the molded body was cut off and used as a sample for the foaming test. A contents of inorganic filler in the sample was 4.9% by weight. The characterization was carried out like in Example 3, and the bottom face space indicating a space between the clay layers was assessed as 60 Å and the aspect ratio as 60. It is to be noted that the melt index MI was 2.0 g/10 minutes and the melt tension MT was 2.3 g.

(Example of foam molding with a supercritical gas)

The processing was carried out according to the same procedure as that in Example 3 excluding the point that the infiltration temperature conditions shown in Table 3 (in Example 4) were employed.

[Example 5]

(Example of production of a thermoplastic resin composition by kneading -2-)

17.0 g of homopolypropylene (produced by Idemitsu Sekiyu Kagaku K. K. , grade name: H100M), 2 g of maleic anhydride denatured polypropylene (produced by Sanyo Kasei K. K., Product name: U-mex 1001), and 1 g of organized denatured clay (produced by Nanocor Co., Cloisite 6A) were put in an agate mortar, and were lightly blended. The mixture was removed to Laboplast mill (with the internal volume of 30 cc) produced by Toyo Seiki K. K., and were kneaded and mixed for 5 minutes at 210°C. While the mixture was still hot, the mixture was took out from the vessel and gradually cooled to the room temperature. The mixture was molded to a form with the area of 60 mm x 60 mm and the thickness of 300 μm with a hot pressing machine at 210°C, and a portion of the molded body was cut off and used as a sample for the foaming test. A contents of inorganic filler in the sample was 3.6% by weight. The characterization was carried out like in Example 3, and the bottom face space indicating a space between the clay layers was assessed as 60 Å or more and the aspect ratio as 70. It is to be noted that the melt index MI was 3.1 g/10 minutes and the melt tension MT was 1.6 g.

(Example of foam molding with a supercritical gas)

The processing was carried out according to the same procedure as that in Example 3 excluding the point that the infiltration temperature conditions shown in Table 3 (in Example 5) were employed.

[Comparative Example]

(Example of production of a thermoplastic resin composition by kneading -2-)

19.0 g of homopolypropylene (produced by Idemitsu Sekiyu Kagaku K. K., Grade name: H100M) and 1 g of refined talc (TP-A 25 produced by Fuji Talc K. K.) were put in an agate mortar, and were lightly blended. The mixture was removed to Laboplast mill produced by Toyo Seiki K. K (with the internal volume of 30 cc), and was kneaded for 5 minutes at 210°C. While the mixture was still hot, the mixture was took out from the vessel, and was gradually cooled to the room temperature. The mixture was molded into a molded body with the area of 60 mm x 60 mm and the thickness of 300 μm, and a portion of the mixture was cu off and used as a sample for the foaming test. A content of inorganic filler in the sample was 4.9% by weight, and the characterization was carried out like in Example 1 to determine that the bottom face space indicating a space between the clay layers is 10 Å, and the average aspect ratio was 10. It is to be noted that the MI was 2.0 g/10 minutes and the MT was 1.8.

(Example of foam molding with a supercritical gas)

The processing was carried out like in Example 3 excluding the point that the infiltration temperature condition as shown in Table 2 (Comparative Example 2) was employed.
Conditions for productions, conditions for kneading, melting characteristics, and conditions for $CO_2$ infiltration are shown in Table 3. A result of assessment of the distribution structure and foam characteristics in Examples 3 to 5 and in Comparative Example 2 are shown in Table 4.

Table 3

| | Nano PP production method | | | Kneading conditions | | Melting characteristics | | Conditions for infiltration | | | Foaming | |
|---|---|---|---|---|---|---|---|---|---|---|---|---|
| | Type of filler | Production method | Contents of inorganic filler (%) | Temperature (°C) | Number of revolutions (rpm) | MI (g/10 min) | MT (g) | Temperature (°C) | Pressure (MPa) | Time | Depressurizing temperature (°C) | Used gas |
| Example 3 | Silane-processed silicon fluoride mica | Polymerization method | 3.8 | 210 | 50 | 3.5 | 1.8 | 200 | 15 | 2 hours | 140 | $CO_2$ |
| Example 4 | Synthesized hectorite | Kneading method | 4.9 | 210 | 50 | 2.0 | 2.3 | 200 | 15 | 2 hours | 100 | $CO_2$ |
| Example 5 | Organized denatured clay (montomorillonite) | Kneading method | 3.6 | 210 | 50 | 3.1 | 1.6 | 200 | 15 | 2 hours | 100 | $CO_2$ |
| Comparative Example 2 | Refined talc | Kneading method | 4.9 | 210 | 50 | 2.0 | 1.8 | 200 | 15 | 2 hours | 140 | $CO_2$ |

Table 4

| | Distributed structure | | Conditions for infiltration | | |
|---|---|---|---|---|---|
| | Aspect ratio | Bottom face space (Inter-layer space) | Average gain diameter ($\mu$m) | Cell density (pieces/cm$^3$) | Specific elasticity modulus (MPa)*3 |
| Example 3 | 100 | over 60Å | 6 | $4\times10^9$ | 3100 |
| Example 4 | 60 | over 60Å | 3 | $8\times10^9$ | 3300 |
| Example 5 | 70 | over 60Å | 10 | $1\times10^9$ | 2950 |
| Comparative Example 2 | 10 | 10Å | 40 | $4\times10^8$ | 2300 |

*3 The specific elasticity modulus was calculated with the Vibron meter from the viscosity/elasticity characteristics and the density.

[Result of Experiment]

As shown in Table 3 and Table 4, it is determined that, in Examples 1 to 3 in which silicon fluoride mica, hectorite, and montmorillonite were used, fillers in the resin composition are sufficiently and more homogeneously distributed as compared to Comparative Example 1. As a result; it was determined that, in the foams in Examples 3 to 5, the average diameter of the bubbles was small, namely 10 $\mu$m or less, and also the cell density was twice or more than that in Comparative Example 2, and that the foams were fine and homogeneous with the high specific elasticity modulus.

**Industrial Availability**

The present invention relates to a composite resin composition, resin foam, and a method of producing the same, and by finely distributing layered clay in a thermoplastic resin, the product can be used as a molded resin item.

**Claims**

**1.**    A composite resin composition comprising (A) polypropylene-based resin by 100 weight portions, (B) organized denatured clay by 0.1 to 50 weight portions, and (C) maleic anhydride denatured polypropylene by 0.5 to 30 weight portions, wherein said maleic anhydride denatured polypropylene satisfies the following conditions:

(C-1) the quantity of not-reacted maleic anhydride is outside a limit for quantitative analysis;
(C-2) the percentage of acid content against a number of polymer chains is not less than 0.8 and not more than 2.0;
(C-3) the molecular weight distribution is not less than 2.5;
(C-4) the content of components with the molecular weight of 10,000 or less is not more than 0.5% by weight; and
(C-5) the ultimate viscosity ($\eta$) is 1 or more.

**2.**    The composite resin composition according to claim 1, wherein the melt index (MI) is not less than 0.4 g/10 minutes and not more than 60 g/10 minutes, and at the same time the melt tension (MT) satisfies the following expression:

$$\log MT > -0.8 \, (\log MI) + 0.54.$$

**3.**    The composite resin composition according to claim 1 or claim 2, wherein said organized denatured clay is generated by converting a 2:1 type of layered silicate with the layer charge of not less than 0.1 and not more than 0.7 to the organic form.

**4.**    Resin foam produced by foaming the composite resin composition according to any of claims 1 to 3, said composite resin composition being organized denatured clay with the average molecular diameter of 150 or below and showing no peak angle value when subjected to wide-angle X ray diffraction.

**5.** The resin foam according to claim 4, wherein the foam cell diameter is 10 μm or below.

**6.** The resin foam according to claim 4 or claim 5 having resin layers and porous layers, wherein these resin layers and porous layers are alternately provided and interlaced with each other to form a cyclic structure.

**7.** A method of producing resin foam comprising the steps of:

heating a composite resin composition according to any of claims 1 to 3 comprising organized denatured clay having the average molecule diameter of 150 nm or below and not showing no peak angle value when subjected to wide-angle X ray diffraction to a temperature not lower than the melting point (Tm) of the composite resin composition and not higher than (Tm+50)°C;
infiltrating a supercritical phase gas into the composite resin composition in the fused state; and
cooling the composite resin composition infiltrated with the supercritical gas to a temperature within ± 20°C from the crystallizing temperature of the composite resin composition for degassing.

**8.** A method of producing resin foam comprising the steps of

infiltrating a supercritical gas with the temperature in the gas atmosphere not lower than the crystallizing temperature (Tc) of said composite resin composition - 20°C ((Tc-20)°C ) and not higher than the crystallizing temperature (Tc) of said composite resin composition + 50°C ((Tc+50)°C) into the composite resin composition according to any of claims 1 to 3 comprising organized denatured clay having the average molecule diameter of 150 nm or below and not showing no peak angle value when subjected wide-angle X ray diffraction; and
cooling the composite resin composition infiltrated with the supercritical gas to a temperature within ± 20°C from the crystallizing temperature of the composite resin composition for degassing.

**9.** The method of producing resin foam according to claim 7 or claim 8 comprising the steps of:

molding the composite resin compound infiltrated with the supercritical gas in a molding box; and
depressurizing inside of the molding box with the composite resin composition molded therein for degassing.

**10.** Resin foam prepared by infiltrating a supercritical gas in a resin composition comprising a thermoplastic resin by 100 weight portions and layered silicate by 0.1 to 40 weight portions, wherein the average grain particle (major axis) is not more than 100 nm, and a peak angle value can not be identified in the board X ray diffraction.

**11.** The resin foam according to claim 10, wherein the melt index (MI) of said resin foam is in the range from 0.4 to 60 g/10 minutes, and the melt tension (MI) satisfies the following expression:

$$\log MT > -0.8 (\log MI) + 0.54.$$

**12.** The resin foam according to claim 1o or claim 11, wherein a foam cell diameter of said foam is 10μm or below.

**13.** The resin foam according to any of claims 10 to 12, wherein resin layers and porous layers are provided alternately and interlaced with each other to form a cyclic structure.

**14.** A method of producing resin foam comprising the steps of:

infiltrating a supercritical gas into a resin composition comprising a thermoplastic resin by 100 weight portions and a layered silicate by 0.1 to 40 weight portions, said layered silicate having the average grain diameter (major axis) of 100 nm or below and also not showing any identifiable peak angle value in wide-angle X ray diffraction when said resin composition is in the temperature range from the melting point (described as Tm hereinafter) to (Tm + 50)°C; and
cooling the resin composition to the temperature (the crystallizing temperature of said resin composition (described as Tc hereinafter) ± 20)°C for degassing.

**15.** The method of producing resin foam according to claim 14, wherein the operation for setting said resin composition into a specific form is carried out in a die; a supercritical gas is infiltrated in said resin composition; and then degassing is carried out by drawing back the die and depressurizing and/or cooling inside of the die.

**16.** A method of producing resin foam comprising the steps of:

infiltrating a supercritical gas into a resin composition comprising a thermoplastic resin by 100 weight portions and a layered silicate by 0.1 to 40 weight portions, said layered silicate having the average grain diameter (major axis) of 100 nm or below and also not showing any identifiable peak angle value in wide-angle X ray diffraction when the temperature in the gas atmosphere is in the temperature range from the melting point (Tc - 20) to (Tc + 50)°C; and
cooling the resin composition to the temperature (Tc + 20)°C for degassing.

**17.** The method of producing resin foam according to any of claims 14 to 16, wherein the supercritical gas is infiltrated into a resin composition comprising a thermoplastic resin by 100 weight portions, a 2:1 type layered composition having the layer charge from 0.1 to 0.7, and a nucleus-forming agent by 0.01 to 5 weight portions.

**18.** The method of producing resin foam according to any of claims 14 to 17, wherein the melt index of said resin composition is in the range from 0.4 to 60 g/10 minutes, and the melt tension MT satisfies the following expression:

$$\log MT > -0.8 (\log MI) + 0.54 \qquad\qquad \text{expression (1).}$$

# FIG.1A

# FIG.1B

# FIG.2

(STEP 1)

> (A) POLYPROPYLENE-BASED RESIN
> (B) ORGANIZED DENATURED CLAY
> (C) SPECIFIED MATEIC ANHYDRIDE DENATURED PP

(STEP 2)

> KNEADING

(STEP 3)

> A RESIN COMPOSITE CONTAINING CLAY LAYERS

(STEP 4)

> FOAMING IN THE
> SUPERCRITICAL STATE

(STEP 5)

> SUPERCRITICAL FINE RESIN FOAM

# F I G . 3 A

# F I G . 3 B

# FIG.4

EP 1 408 081 A1

## INTERNATIONAL SEARCH REPORT

International application No.

PCT/JP02/06285

A. CLASSIFICATION OF SUBJECT MATTER
Int.Cl$^7$  C08L23/10, C08K9/06, B29C44/00

According to International Patent Classification (IPC) or to both national classification and IPC

B. FIELDS SEARCHED

Minimum documentation searched (classification system followed by classification symbols)
Int.Cl$^7$  C08L23/00-23/36, C08K3/00-13/08, B29C44/00-44/60

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 10-182892 A  (Toyota Central Research And Development Laboratories, Inc.), 07 July, 1998 (07.07.98), Full description (Family: none) | 1-18 |
| Y | JP 10-230528 A  (Mitsui Chemicals, Ltd.), 02 September, 1998 (02.09.98), Full description & EP 799853 A1            & CN 1170662 A & US 5997781 A1 | 1-18 |
| P,Y | JP 2002-30181 A  (JSP Corp.), 31 January, 2002 (31.01.02), Full description (Family: none) | 1-18 |

☐ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 10 September, 2002 (10.09.02) | 24 September, 2002 (24.09.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

31

**INTERNATIONAL SEARCH REPORT**

International application No.

PCT/JP02/06285

C (Continuation). DOCUMENTS CONSIDERED TO BE RELEVANT

| Category* | Citation of document, with indication, where appropriate, of the relevant passages | Relevant to claim No. |
|---|---|---|
| P,Y | WO 02/02682 A1 (Samsung General Chemicals Co., Ltd.), 10 January, 2002 (10.01.02), Full description (Family: none) | 1-18 |
| P,Y | WO 02/06388 A1 (Samsung General Chemicals Co., Ltd.), 24 January, 2002 (24.01.02), Full description (Family: none) | 1-18 |

Form PCT/ISA/210 (continuation of second sheet) (July 1998)